# EUROPÄISCHE PATENTANMELDUNG

(11) **EP 1 107 165 A2**
(43) Veröffentlichungstag der Anmeldung: **13.06.2001**
(21) Anmeldenummer: 00126958.8
(22) Anmeldetag: 08.12.2000
(51) Int. Cl.: G06K 7/10

(54) **Vorrichtung zur Erzeugung eines Antwortsignals aus einem Eingangssignal**

(30) Priorität: 10.12.1999 DE 19959649
(71) Anmelder: VLG Virtual Laser Systems GmbH, 82152 Krailling (DE)
(72) Erfinder: Sonntag, Harald Dieter, 81477 München (DE); Ehinger, Markus, Dr., 82152 Krailling (DE)
(74) Vertreter: Schmidt, Steffen J., Dipl.-Ing.

(57) **Zusammenfassung**

Vorrichtung zur Erzeugung eines Antwortsignals aus einem Eingangssignal mit einer Empfangseinrichtung zum Empfang eines Eingangssignals in Form einer elektromagnetischen Welle mit ersten aufgeprägten Daten und einer mit der Empfangseinrichtung verbundenen Steuereinrichtung zum Steuern der erfindungsgemäßen Vorrichtung in Antwort auf das Eingangssignal. Ferner umfaßt die erfindungsgemäße Vorrichtung eine Signalumwandlungseinrichtung zum Umwandeln des Eingangssignals oder wenigstens eines Teils desselben in ein Antwortsignal, das ebenfalls eine elektromagnetische Welle ist und zweite aufgeprägte Daten aufweist. Mittels einer Reflektoreinrichtung wird wenigstens ein Teil des Eingangssignals zu der Signalumwandlungseinrichtung übertragen.

## Beschreibung

### Hintergrund der Erfindung

Die vorliegende Erfindung betrifft eine Vorrichtung zur Erzeugung eines Antwortsignals aus einem Eingangssignal. Derartige Vorrichtungen werden beispielsweise in Form von Personen-Identifikationssystemen, Diebstahlssicherungssystemen, Warenfluß-Steuersystemen, Gepäckfluß-Steuersystemen, Zugangskontrollsystemen und dergleichen verwendet. Bei solchen Transponder-Systemen wird ein Eingangssignal, das beispielsweise von einem Geber erzeugt und ausgesendet wird, von einer derartigen Vorrichtung, beispielsweise einem Transponder, empfangen, die in Antwort auf das Eingangssignal ein Antwortsignal erzeugt und aussendet. Das Antwortsignal kann nicht nur den Empfang des Eingangssignals angeben, sondern auch zusätzliche Daten, beispielsweise charakteristische Kenndaten, umfassen.

### Stand der Technik

Herkömmlicherweise umfassen derartige Vorrichtungen einen Empfänger, um ein Eingangssignal zu empfangen, und eine mit dem Empfänger verbundene Rechnereinheit, um das Eingangssignal, das beispielsweise charakteristische Kenndaten für eine das Eingangssignal ausgebende Vorrichtung oder Steuerbefehle für die Rechnereinheit umfassen kann, zu verarbeiten. In Abhängigkeit von dem empfangenen Eingangssignal erzeugt die Rechnereinheit ein Antwortsignal und überträgt dieses Antwortsignal mittels eines entsprechenden Senders an die das Eingangssignal erzeugende Vorrichtung und/oder an andere Empfangsvorrichtungen aus.

Hierfür benötigt die Vorrichtung zur Erzeugung des Antwortsignals neben den Komponenten zum Aussenden des Antwortsignals auch Komponenten zur Erzeugung des Antwortsignals. Daher weisen derartige Vorrichtungen z.T. einen sehr komplexen Aufbau auf und erfordern zum Erzeugen und Aussenden des Antwortsignals Betriebsenergie, die angesichts der Betriebsdauer und der gewünschten Abmessungen derartiger Vorrichtungen z.T. nur erschwert bereitgestellt werden kann.

### Aufgabe der Erfindung

Daher ist es eine Aufgabe der Erfindung, eine Vorrichtung zum Erzeugen eines Antwortsignals bereitzustellen, die insbesondere hinsichtlich der Komponenten zum Erzeugen und Aussenden eines Antwortsignals einen deutlich einfacheren Aufbau aufweist und hierfür weniger Betriebsenergie benötigt.

### Erfindungsgemäße Lösung

Der erfindungsgemäße Lösungsansatz für diese Aufgabe besteht darin, daß bei der Erfindung keine neuen Signale in Antwort auf Eingangssignale als Antwortsignale erzeugt, sondern Antwortsignale aus Eingangssignalen gewonnen werden.

Hierfür stellt die Erfindung eine Vorrichtung gemäß Anspruch 1 bereit. Diese Vorrichtung zum Erzeugen eines Antwortsignals aus einem Eingangssignal umfaßt eine Empfangseinrichtung zum Empfang eines Eingangssignals und eine Steuereinrichtung, die mit der Empfangseinrichtung verbunden ist und die erfindungsgemäße Vorrichtung steuert. Die hier verwendeten Eingangssignale haben die Form von Lichtstrahlen. Unter Steuerung der Steuereinrichtung erzeugt die erfindungsgemäße Vorrichtung ein Antwortsignal, wobei eine Signalumwandlungseinrichtung verwendet wird, die wenigstens einen Teil des Eingangssignals in das Antwortsignal umwandelt. Das erzeugte Antwortsignal hat ebenfalls die Form eines Lichtstrahls. Um wenigstens einen Teil des Eingangssignals zu der Signalumwandlungseinrichtung zu übertragen, wird eine Reflektoreinrichtung verwendet

Die oben genannten Nachteile des Standes der Technik werden erfindungsgemäß dadurch beseitigt, daß kein neues Ausgangssignal erzeugt wird, sondern das Eingangssignal umgewandelt und als Antwortsignal ausgegeben wird. Wenn auch - wie im folgenden beschrieben - spezielle Lichtstrahlen als Eingangssignale verwendet werden können, können bei der Erfindung Lichtstrahlen als Eingangssignale verwendet werden, die Lichtstrahlen mit im wesentlichen konstanten Amplituden und/oder Frequenzen sind (z.B. einzelne Dauerstrahlen oder Folgen von Dauerstrahlen). Dies wird insbesondere dadurch ermöglicht, daß die Steuereinrichtung die erfindungsgemäße Vorrichtung unabhängig von einem als Steuersignal dienenden Signal, beispielsweise dem Eingangssignal, steuern kann.

### Vorteilhafte Ausgestaltungen der Erfindung

Um die erfindungsgemäße Vorrichtung selektiv zu betreiben, kann die Steuereinrichtung so ausgelegt sein, daß sie die Steuerung in Antwort auf das Eingangssignal und/oder eine extern zugeführtes Steuersignal durchführt.

Im einfachsten Fall ist das Eingangssignal und/oder das Antwortsignal sichtbares, gebündeltes oder gerichtetes Licht mit vorzugsweise geringer Divergenz. Es können aber auch Laserlichtstrahlen und Licht im infraroten Spektralbereich bis hin zum ultravioletten Spektralbereich verwendet werden.

Vorzugsweise umfaßt das Eingangssignal erste aufgeprägte Daten und/oder das Antwortsignal zweite aufgeprägte Daten.

Hierbei können die ersten aufgeprägten Daten des Eingangssignals eine Kennung einer das Eingangssignal erzeugenden Vorrichtung, einen Programmcode und/oder Steuerbefehle für die Steuereinrichtung der erfindungsgemäßen Vorrichtung umfassen. Alternativ oder ergänzend kann das Eingangssignal auch ein mit einer definierten Frequenz (z.B. 38 kHz) modulierter Lichtstrahl sein.

In vergleichbarer Weise können die zweiten aufgeprägten Daten die Kennung der das Eingangssignal erzeugenden Vorrichtung, eine Kennung der Steuereinrichtung der erfindungsgemäßen Vorrichtung, eine der erfindungsgemäßen Vorrichtung zugeordnete Kennung, einen Programmcode und/oder Steuerbefehle für eine das Antwortsignal empfangende Vorrichtung umfassen.

Da das Eingangssignal zu der erfindungsgemäßen Vorrichtung übertragen werden muß, hat das Eingangssignal andere Spezifikationen zu erfüllen als Signale, die von der erfindungsgemäßen Vorrichtung intern verwendet werden. Abhängig von der jeweiligen technischen Ausführung der Erfindung kann es vorteilhaft sein, daß die Empfangseinrichtung Einrichtungen zum Umwandeln des Eingangssignals oder wenigstens eines Teiles desselben umfaßt, um ein internes Eingangssignal zu erzeugen, das ein Lichtstrahl ist und vorzugsweise die ersten aufgeprägten Daten umfaßt. Der Typ des Lichtstrahls des internen Eingangssignals entspricht vorzugsweise dem Typ des Lichtstrahls des Eingangssignals, kann aber in Abhängigkeit der verwendeten Empfangseinrichtung ein Lichtstrahl anderen Typs sein. Beispielsweise kann das Eingangssignal ein Laserstrahl und das interne Eingangssignal ein Infrarot-Lichtstrahl sein. Unabhängig von dem Typ des Lichtstrahls des internen Eingangssignals wird ein erste aufgeprägt Daten aufweisendes Eingangssignal so in das interne Eingangssignal umgewandelt, daß das letztere die ersten aufgeprägten Daten umfaßt.

Ferner kann eine Detektoreinrichtung verwendet werden, um wenigstens einen Teil des Eingangssignals oder wenigstens einen Teil des internen Eingangssignals und/oder die ersten aufgeprägten Daten und/der die definierte Modulationsfrequenz zu detektieren. Hierbei kann die Detektoreinrichtung auf das Vorliegen des Eingangssignals oder des internen Eingangssignals ansprechen, beispielsweise wenn ein vorgegebener Grenzwert überschritten wird, insbesondere wenn Eingangssignale verwendet werden, die Lichstrahlen mit im wesentlichen konstanten Amplituden und/oder Frequenzen (einzelne Dauerstrahlen oder Folgen von Dauerstrahlen) sind.

Ferner ist es möglich, daß die Detektoreinrichtung auf die ersten aufgeprägten Daten oder Teile davon anspricht, wobei in diesen Fällen die Detektoreinrichtung wenigstens einen Teil des empfangenen Eingangssignals oder internen Eingangssignals und/oder wenigstens einen Teil der ersten aufgeprägten Daten oder entsprechende Signale an die Steuereinrichtung überträgt, damit diese in Antwort auf das Eingangssignal die erfindungsgemäße Vorrichtung steuert. Außerdem kann die Detektoreinrichtung auf die definierte Modulationsfrequenz ansprechen. Wird ein mit einer Frequenz von 38 kHz modulierter Lichtstrahl als Eingangssignal verwendet, kann beispielsweise ein Photodetektor vom Typ TSOP 1838 verwendet werden, der auf diese Frequenz anspricht. Die erfindungsgemäße Vorrichtung kann auch ohne die Detektoreinrichtung betrieben werden, da diese nur dann erforderlich ist, wenn die Steuereinrichtung in Antwort auf das Eingangsignal betrieben wird. Dies ist der Fall, wenn die Steuereinrichtung wenigstens teilweise kontinuierlich oder in Antwort auf ein extern zugeführtes Signal betrieben wird.

Abhängig von den unterschiedlichen Anwendungsgebieten der Erfindung kann die Steuereinheit aktiviert werden, wenn ein Eingangssignal empfangen wurde oder wenn auf den Empfang des Eingangssignals das interne Eingangssignal erzeugt worden ist. Hierbei ist es möglich, daß die Steuereinrichtung die erfindungsgemäße Vorrichtung bei empfangenen Signalen in gleicher Weise steuert oder in Abhängigkeit von der Art der empfangenen Signale. Ferner kann die Steuerung der erfindungsgemäßen Vorrichtung in Abhängigkeit der ersten aufgeprägten Daten gesteuert werden.

Vorzugsweise umfaßt die Reflektoreinrichtung wenigstens einen Spiegel.

Alternativ zu der Reflektoreinrichtung oder in Verbindung mit derselben kann eine Signalleitung verwendet werden, um das Eingangssignal oder das interne Eingangssignal bzw. wenigstens einen Teil derselben zu der Signalumwandlungseinrichtung zu übertragen. Wie bei der Reflektoreinrichtung ist die Signalleitung in Abhängigkeit der vorliegenden Eingangs- und internen Eingangssignale zu wählen, wobei die Signalleitung vorzugsweise wenigstens einen Lichtleiter oder ein Lichtleiterbündel umfaßt.

Um das Eingangssignal oder das aus dem Eingangssignal resultierende interne Eingangssignal in das Antwortsignal umzuwandeln, weist die Signalumwandlungseinrichtung Einrichtungen zum Aufprägen der zweiten aufgeprägten Daten auf den empfangenen Teil des Eingangssignals oder des internen Eingangssignals auf. Hierbei können optische Shutter, optische Polarisatoren, optische Integratoren und/oder optische Transformatoren verwendet werden.

Ferner kann die erfindungsgemäße Vorrichtung eine Ausgabeeinrichtung zum Ausgeben des Antwortsignals umfassen.

Außerdem stellt die Erfindung eine Vorrichtung gemäß Anspruch 18 bereit, die zur Verwendung mit einer der obengenannten Vorrichtungen zum Erzeugen eines Antwortsignals aus einem Eingangssignal ausgelegt ist. Eine solche Vorrichtung umfaßt einen Sender zum Aussenden des Eingangssignals und/oder einen Empfänger zum Empfangen des Antwortsignals.

Bevorzugte Ausführungsformen der Erfindung werden im folgenden unter Bezugnahme auf die beigefügten Figuren detaillierter beschrieben.

### Kurzbeschreibung der Zeichnungen

- Fig. 1A und 1B: zeigen das Prinzip der Erfindung.
- Fig. 2: zeigt eine Ausführungsform der erfindungsgemäßen Vorrichtung mit baueinheitlich ausgeführten Empfangs-, Signalumwandlungs- und Ausgabeeinrichtungen.
- Fig. 3: zeigt eine Ausführungsform der vorliegenden Erfindung mit getrennt angeordneten Empfangs-, Signalumwandlungs- und Ausgabeeinrichtungen.
- Fig. 4: zeigt eine weitere Ausführungsform der vorliegenden Erfindung mit baueinheitlich ausgeführten Empfangs-, Signalumwandlungs- und Ausgabeeinrichtungen.
- Fig. 5: zeigt die weitere Ausführungsform der vorliegenden Erfindung mit getrennt angeordneten Empfangs-, Signalumwandlungs- und Ausgabeeinrichtungen.

### Beschreibung bevorzugter Ausführungsformen

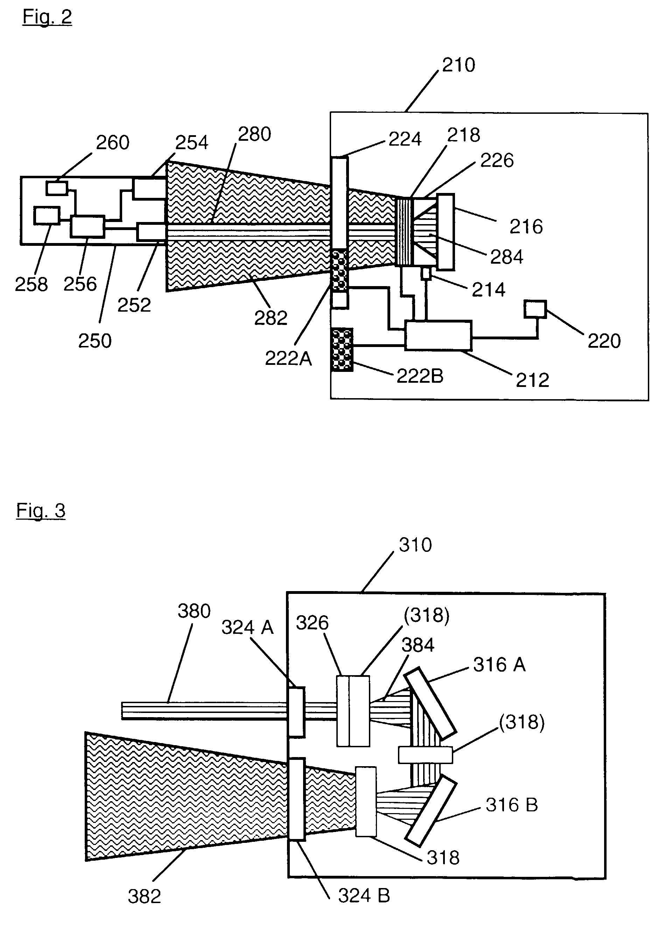

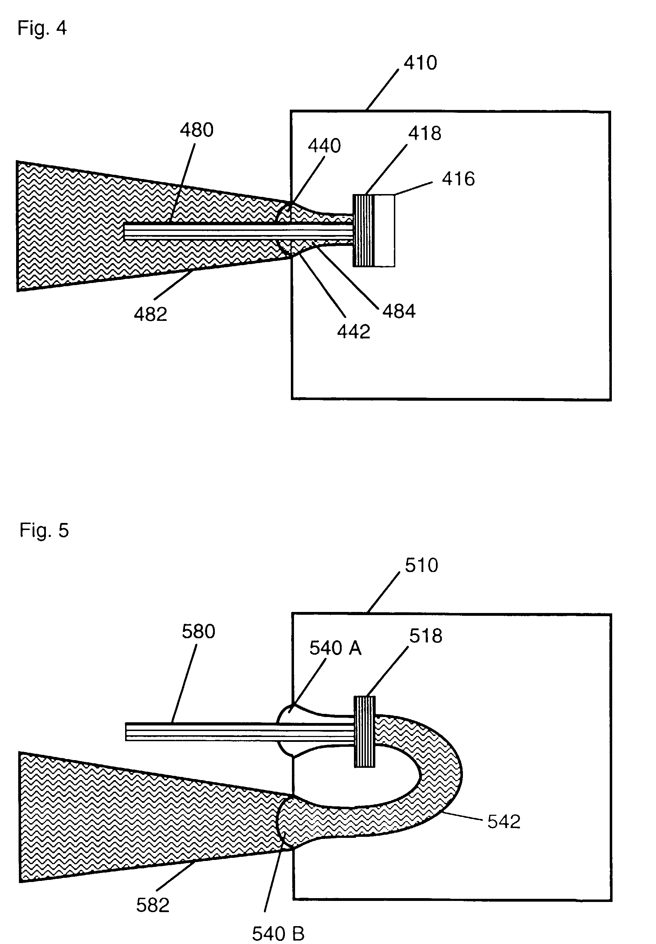

Im folgenden wird die Erfindung anhand von Ausführungsformen beschrieben, bei denen als Signale in Form von Lichtstrahlen verwendet werden. Insbesondere werden Laserstrahlen als Eingangssignale verwendet, die von einer erfindungsgemäßen Vorrichtung zur Erzeugung eines Antwortsignals in Infrarot-Lichtstrahlen umgewandelt werden, die als interne Eingangssignale verwendet und als Antwortsignale ausgegeben werden. Die Verwendung von Infrarot-Lichtstrahlen sowohl für interne Eingangssignale als auch für Antwortsignale resultiert aus den Ausführungsformen der Erfindung, bei denen die Empfangs-, Signalumwandlungs- und Ausgabeeinrichtungen baueinheitlich ausgeführt sind, wie unter Bezugnahme auf die Figuren 2 und 4 beschrieben wird. Alternativ ist es möglich, ein internes Eingangssignal zu verwenden, das ein beliebiger Lichtstrahl ist, beispielsweise ein Laserlichtstrahl oder ein Lichtstrahl mit einem bestimmten Spektralbereich, wobei auch hier das Antwortsignal ein Infrarot-Lichtstrahl sein sollte, um beim Aussenden des Antwortsignals eine mögliche Gefährdung eines Benutzers zu vermeiden, der beispielsweise mit einem tragbaren Geber ein Eingangssignal erzeugt hat und das Antwortsignal empfangen soll. Demgegenüber kann für das Antwortsignal auch ein Laserstrahl verwendet werden, wenn beispielsweise keine Personen gefährdet werden können oder das Antwortsignal über große Entfernungen übertragen werden soll, z.B. zu einem von der das Eingangssignal erzeugenden Vorrichtung räumlich getrennt angeordneten Empfänger.

Bei den im folgenden verwendeten Bezugszeichen gibt die erste Ziffer die Figur und die zwei folgenden Ziffern unterschiedliche Komponenten der erfindungsgemäßen Ausführungsformen an. Gleiche oder vergleichbare Komponenten werden in allen Figuren mit zwei gleichen Endziffern bezeichnet.

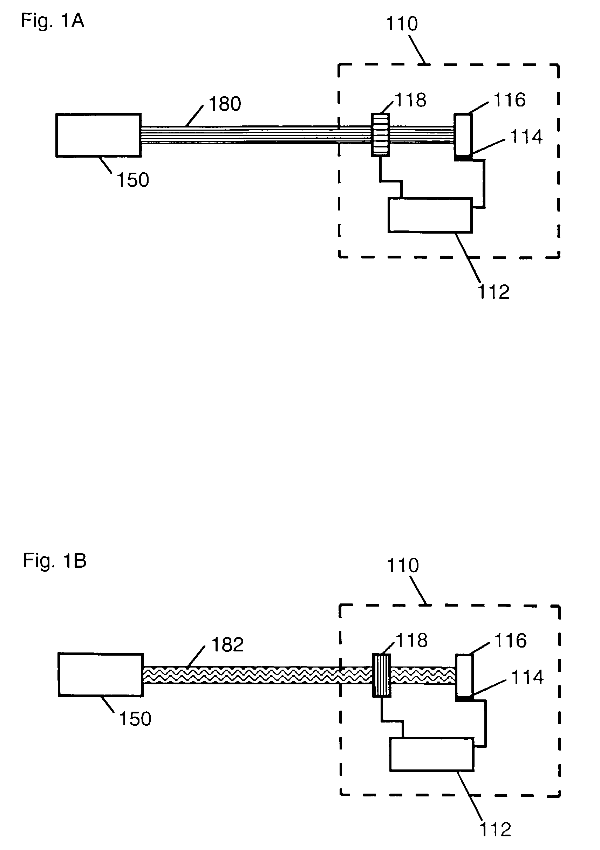

Bezugnehmend auf Figuren 1A und 1B wird nun das Prinzip der Erfindung erläutert. Die Vorrichtung 110 zur Erzeugung eines Antwortsignals aus einem Eingangssignal umfaßt im wesentlichen eine Steuereinheit 112, die mit einer Detektoreinrichtung 114 verbunden ist. Ferner weist die Vorrichtung 110 einen Reflektor 116 und einen optischen Shutter 118 auf, der mit der Steuereinrichtung 112 verbunden ist, um durch diese gesteuert zu werden. Der optische Shutter 118 ist im Verhältnis zu dem Reflektor 116 hier so angeordnet, daß auf den Reflektor 116 einfallende Lichtstrahlen und von dem Reflektor 116 reflektierte Lichtstrahlen den optischen Shutter 118 passieren. Wie im folgenden anhand von Figuren 3 und 5 dargestellt, sind andere räumliche Anordnungen des Reflektors 116 und des optischen Shutters 118 möglich, wobei gewährleistet sein muß, daß von dem Reflektor 116 reflektierte Lichtstrahlen den optischen Shutter 118 passieren, bevor sie die Vorrichtung 110 verlassen.

Der Detektor 114 ist in der Vorrichtung 110 so anzuordnen, daß ein in die Vorrichtung 110 einfallender Lichtstrahl detektiert werden kann. Um zusätzliche optische Elemente, die einen Lichtstrahl zu dem Detektor 114 leiten, zu vermeiden, ist zu bevorzugen, den Detektor 114 benachbart zu dem Reflektor 116 anzuordnen oder mit diesem baueinheitlich auszuführen.

Die Steuereinrichtung 112 verwendet den Detektor 114, um festzustellen, ob Licht in Form eines Lichtstrahls mit vorgegebenem Typ (beispielsweise mit einer Frequenz von 38 kHz moduliertes Licht, Licht einer bestimmten Wellenlänge, einer bestimmten Folge von Lichtpulsen oder einer bestimmten Intensität) empfangen wurde. Im Falle eines mit einer Frequenz von 38 kHz modulierten Lichtstrahls kann zum Beispiel ein Photodetektor von Typ TSOP 1838 verwendet werden.

Dementsprechend steuert die Steuereinrichtung 112 den optischen Shutter 118 an, der beispielsweise als Flüssigkristallschicht (LC-Schicht) oder als auf dem Kerr-Effekt basierende Bauteile ausgeführt sein kann.

Anstelle und in Ergänzung des optischen Shutters 118 können auch optische Polarisatoren, Modulatoren, Integratoren oder vergleichbare optische Elemente verwendet werden, die geeignet sind, einen Lichtstrahl umzuwandeln und/oder Daten auf denselben aufzuprägen. Ferner ist es möglich, derartige optische Elemente baueinheitlich mit dem optischen Shutter 118 auszuführen, wobei sich Anordnungen der optischen Elemente und des optischen Shutters 118 bezüglich der Ausbreitungsrichtung des Antwortsignals 182 in Abhängigkeit des Antwortsignales und/oder der verwendeten Komponenten der Vorrichtung 110 unterscheiden können.

Die zuvor beschriebene Steuerung des optischen Shutters kann in vergleichbarer Weise auch - ergänzend oder optional - in Antwort auf ein extern zugeführtes Signal (nicht gezeigt) durchgeführt werden. So wird es möglich eine oder mehrere Vorrichtungen 110 z.B. z.B. mittels eines zentralen Steuersystems gemeinsam oder einzelne Vorrichtungen 110 selektiv zu aktivieren. Hierfür geeignete Steuersignale können auch telemetrisch übertragen werden.

In einer einfachen Ausführung kann die Vorrichtung 110 auch ohne die Detektoreinrichtung 114 betrieben werden, nämlich dann, wenn die Steuereinrichtung 112 den optischen Shutter kontinuierlich oder für vorbestimmte Zeitintervalle ansteuert, in denen Eingangsstrahlen empfangen werden sollen und/oder können (z.B. abhängig von der Tageszeit und/oder dem Tag).

Im folgenden wird der Betrieb der Vorrichtung 110 zur Erzeugung eines Antwortsignals aus einem Eingangssignal beschrieben, wobei die Detektoreinrichtung 114 verwendet wird. Von einer Vorrichtung 150, die beispielsweise ein tragbarer Signalsender und -empfänger oder dergleichen sein kann, wird ein Eingangssignal 180 in Form eines Laserstrahls ausgesendet. Das Eingangssignal 180 passiert den optischen Shutter 118, der sich in seinem lichtdurchlässigen Zustand befindet, und fällt auf den Detektor 114 und den Reflektor 116. Der Detektor 114 detektiert den einfallenden Laserstrahl 180 und überträgt ein Signal zu der Steuereinrichtung 112, das den Einfall des Eingangssignals 180 angibt (Figur 1A).

Darauf steuert die Steuereinrichtung 112 den optischen Shutter 118 so an, daß er zwischen lichtdurchlässigen und lichtundurchlässigen (oder wenigstens lichtabsorbierenden) Zuständen wechselt. Dieses mit einer Rate von derzeit vorzugsweise bis zu etwa 100-200 Hz erfolgende Schalten des optischen Shutters 118 verursacht, daß das von dem Reflektor 116 reflektierte Licht entsprechend des Schaltrhythmus als Antwortsignal 182 ausgegeben wird (Figur 1B). Hierbei ist es nicht erforderlich, daß der Shutter 118 optisch vollständig geschlossen wird, um einen lichtundurchlässigen Zustand einzunehmen, sondern er kann auch so angesteuert werden, um einen Zustand einzunehmen, in dem er das reflektierte Licht wenigstens teilweise absorbiert.

Der Schaltrhythmus des optischen Shutters 118 bestimmt die Daten, die dem Antwortsignal 182 aufgeprägt werden, das im wesentlichen aus Licht des Eingangssignals 180 besteht. Das Antwortsignal 182 wird von der Vorrichtung 150 empfangen und die dem Antwortsignal 182 aufgeprägten Daten decodiert. Diese dem Antwortsignal 182 aufgeprägten Daten können beispielsweise Artikelnummern, Preise, Lieferzeiten und vergleichbare Produktinformationen umfassen. Ferner können diese aufgeprägten Daten auch eine charakteristische Kennung der Vorrichtung 110 aufweisen.

Ausgehend von dieser grundsätzlichen Vorgehensweise wird unter Bezugnahme auf Figur 2 eine Ausführungsform der Erfindung beschrieben. Die Vorrichtung 210 umfaßt neben der Steuereinrichtung 212, dem Detektor 214, dem Reflektor 216 und dem optischem Shutter 218 eine Energiequelle 220 (beispielsweise einen Akkumulator, eine Batterie, eine Folienbatterie) und/oder Solarzellen 222A und222B, um die Vorrichtung 210 mit Energie zu versorgen. Die Solarzellen 222A und 222B können alternativ oder ergänzend verwendet werden, wobei die Solarzellen 222A und 222B durch Umgebungslicht, das Eingangssignal 280 und/oder Streulicht des Eingangssignals 280 gespeist werden können.

Ferner weist die Vorrichtung 210 eine lichtdurchlässige Oberfläche 224 (Glas, Folie ...) auf, die geeignet ist, Licht beispielsweise in Form eines Laserstrahls durchzulassen. Die lichtdurchlässige Oberfläche 224 dient in erster Linie zum Schutz der Komponenten der Vorrichtung 210, kann aber auch verwendet werden, um als Filter, Modulator, Transformator für einfallendes Licht zu dienen.

Zwischen dem optischen Shutter 218 und dem Reflektor 216 ist eine optische Schicht 226 angeordnet, die als Diffusor und/oder Transformator wirkt. Diese Schicht 226 dient zum Streuen von einfallendem Licht und zum Transformieren des einfallenden Lichts auf andere Wellenlängen. Auf diese Weise kann aus dem empfangenen Signal 280 ein sogenanntes internes Eingangssignal 284 erzeugt werden, das zur Verwendung/Verarbeitung durch die Vorrichtung 210 optimal angepaßt ist. Falls das Eingangssignal 280 aufgeprägte Daten aufweist, sollte gewährleistet sein, daß ebenfalls das interne Eingangssignal 284 diese aufgeprägten Daten in möglichst unveränderter Form aufweist.

Außerdem kann die Vorrichtung 210 einen Speicher (nicht gezeigt) umfassen, in dem Daten eines empfangenen Eingangssignals gespeichert und/oder Daten ausgelesen werden, die einem Antwortsignal aufgeprägt werden können.

Die als Sender und Empfänger dienende Vorrichtung 250 umfaßt einen Lasersender 252, einen Infrarotempfänger 254, eine mit diesen verbundene Steuereinheit 256 sowie einen Speicher 258 und eine Energiequelle 260. Die Steuereinheit 256 steuert beim Betrieb der Vorrichtung 250 den Lasersender 252 an, um einen Laserstrahl 280 auszusenden. Dem Laserstrahl 280, der als Eingangssignal für die Vorrichtung 210 dient, können unter Verwendung des Speichers 258 Daten aufgeprägt werden. Die aufgeprägten Daten können charakteristische Kennungen, Steuerbefehle, Programmcodes, Produktinformationen usw. umfassen. Es ist auch möglich, daß das Eingangssignal 280 ein Signal ohne aufgeprägte Daten ist.

Das Eingangssignal 280 in Form eines Laserstrahls passiert im wesentlichen unverändert die lichtdurchlässige Oberfläche 224 und den optischen Shutter 218, der sich in einem lichtdurchlässigen Zustand befindet. Danach passiert der Laserstrahl 218 die optische Schicht 226 und wird durch diese gestreut und in einen Infrarot-Lichtstrahl 284 transformiert. Beispielsweise kann die optische Schicht 226 ein Eingangssignal 280 mit einer Wellenlänge von 650 µm auf eine Wellenlänge von 870 Um transformieren.

Das gestreute Licht 284 fällt zu einem geringen Teil auf den Detektor 214, mit dem die Steuereinrichtung 212 überprüft, ob ein Signal 280 bzw. 284 empfangen wurde und/oder ob das empfangene Signal 280 bzw. 284 aufgeprägte Daten aufweist. In Abhängigkeit des empfangenen Signals 280 bzw. 284 und/oder der diesem aufgeprägten Daten steuert die Steuereinrichtung 212 den optischen Shutter 218 in der oben beschriebenen Weise an.

Das von dem Reflektor 216 reflektierte Infrarotlicht wird in Abhängigkeit des Schaltbetriebs des optischen Shutters 218 rhythmisch unterbrochen und als Antwortsignal 282 ausgegeben.

Bei der in Figur 2 dargestellten Ausführungsform der Vorrichtung 210 sind die Empfangs-, Signalumwandlungs- und Ausgabeeinrichtungen baueinheitlich ausgeführt. Auf diese Weise kann eine kleine Bauform der Vorrichtung 210 erreicht werden, beispielsweise indem die Komponenten in einer Folie oder einem miniaturisierten Gehäuse angeordnet werden.

Anstelle der baueinheitlichen Ausführungsform von Figur 2 kann - wie in Figur 3 dargestellt - die Vorrichtung 310 zum Erzeugen eines Antwortsignals aus einem Eingangssignal getrennt angeordnete Empfangs-, Signalumwandlungs- und Ausgabeeinrichtungen aufweisen. Übersichtshalber sind in Figur 3 nur die Komponenten der Vorrichtung 310 dargestellt, die sich von den Komponenten der Vorrichtung 210 unterscheiden.

Um die erwähnte räumliche Trennung der Komponenten zu erreichen, werden hier anstelle des Reflektors 216 zwei Reflektoren 316A und 316B verwendet. Ferner werden anstelle einer lichtdurchlässigen Oberfläche 224 zwei lichtdurchlässige Oberflächen 324A und 324B verwendet, wobei die Anordnung der lichtdurchlässigen Oberflächen 324A und 324B sowie der Reflektoren 316A und 316B davon abhängen, an welcher Stelle der Vorrichtung 310 das Eingangssignal 380 empfangen und das Antwortsignal 382 ausgegeben werden soll. In Figur 3 ist eine einfache Ausführung dargestellt, bei der das Eingangssignal 380 und das Antwortsignal 382 an einer Seite eines Gehäuses (nicht dargestellt) der Vorrichtung 310 empfangen bzw. ausgegeben werden.

Das Eingangssignal 380 passiert die lichtdurchlässige Oberfläche 324A und die optische Schicht 326, wird in ein internes Eingangssignal 384 umgewandelt und von den Reflektoren 316A und 316B zu der lichtdurchlässigen Oberfläche 324B abgelenkt, um durch diese als Antwortsignal 382 ausgegeben zu werden. Der optische Shutter 318 entspricht im wesentlichen dem optischen Shutter 218, kann aber, wie in Figur 3 durch die mit Klammern versehenen Bezugszeichen angedeutet, an unterschiedlichen Stellen in dem Strahlengang in der Vorrichtung 310 angeordnet werden.

Um die Leitung eines als Eingangssignal dienenden Lichtstrahls in der Vorrichtung zur Erzeugung eines Antwortsignals zu verbessern, können Lichtleiter verwendet werden. Wie in den Figuren 4 und 5 dargestellt, können die Lichtleiter beispielsweise geordnete oder ungeordnete gebündelte Lichtfasern sein. Bei der in Figur 4 gezeigten Ausführungsform wird anstelle der lichtdurchlässigen Oberflächen 224, 324A und 324B eine Linse 440 verwendet, die ein einfallendes Eingangssignal 480 bündelt und, falls erforderlich, auch transformieren kann, beispielsweise auf andere Wellenlängen. Das empfangene Eingangssignal 480 wird von einem Lichtleiterbündel 442 durch den optischen Shutter 418 zu dem Reflektor 416 geleitet. Von dem Reflektor 416 reflektiertes und mittels des optischen Shutters 418 rhythmisch unterbrochenes Licht wird von dem Lichtleiterbündel 442 über die Linse 440 als Antwortsignal 482 ausgegeben. Der Reflektor 416 kann hier, wie bei den zuvor beschriebenen Ausführungsformen, ein bekannter Reflektor, beispielsweise ein Spiegel oder ein Katzenauge, sein.

Die Verwendung des Lichtleiterbündels 442 erlaubt auf einfache Weise, einen (geringen) Teil des Eingangssignals 480 zu dem Detektor 414 zu leiten, indem ein einzelner oder mehrere Leiter des Lichtleiterbündels 442 zu dem Detektor (nicht gezeigt) geführt werden. Auch wenn es bei der Ausführungsform von Figur 4 möglich ist, eine optische Schicht zu verwenden, die mit der optischen Schicht 226 vergleichbar ist, können deren Funktionen auch von der Linse 440 und/oder dem Lichtleiterbündel 442 bereitgestellt werden. So kann eine gewünschte Transformation eines Eingangssignals zu anderen Wellenlängen durch eine entsprechend gewählte Linse und/oder ein entsprechend gewähltes Lichtleiterbündel durchgeführt werden. Ferner erlaubt eine geeignete Wahl der Linse 440, das Antwortsignal 482 so zu streuen, daß es auf einfache Weise empfangen werden kann.

Vergleichbar zu der Ausführungsform von Figur 3 erlaubt die in Figur 5 dargestellte Ausführungsform eine Trennung der Stellen der Vorrichtung 510, an denen ein Eingangssignal 580 empfangen wird bzw. ein Antwortsignal 582 ausgegeben wird. Hierfür werden zwei Linsen 540A und 540B verwendet, die über ein Lichtleiterbündel 542 optisch verbunden sind. Die Verwendung des Lichtleiterbündels 542 erlaubt es, auf einfache Weisen beliebig angeordnete Linsen 540A und 540B zum Empfang bzw. Ausgeben von Signalen anzuordnen. Um ein Eingangssignal 580 in gewünschter Weise in ein Antwortsignal 582 umzuwandeln, ist in dem Strahlengang des Lichtleiterbündels 542 ein optischer Shutter 518 angeordnet, der durch ihn passierendes Licht rhythmisch unterbricht.

Wie oben beschrieben, kann das Eingangssignal ein Signal mit oder ohne aufgeprägten Daten sein. Wird ein Eingangssignal ohne aufgeprägte Daten verwendet, d.h. ein Energie übertragendes Signal, dient das Eingangssignal einerseits zum Aktivieren einer erfindungsgemäßen Vorrichtung, beispielsweise wenn beim Empfang des Eingangssignals ein vorbestimmter Grenzwert überschritten wird. Andererseits stellt das Eingangssignal die Energie für ein Antwortsignal bereit.

Wird ein Eingangssignal mit aufgeprägten Daten verwendet, d.h. ein Energie und Informationen übertragendes Signal, dient das Eingangssignal auch hier einerseits zum Aktivieren einer erfindungsgemäßen Vorrichtung. Hierbei kann die Aktivierung - wie bei einem nur Energie übertragenden Eingangssignal - erfolgen, wenn beim Empfang des Eingangssignals ein vorbestimmter Grenzwert überschritten wird. Alternativ oder ergänzend kann die Aktivierung auch in Abhängigkeit der aufgeprägten Daten oder von Teilen derselben erfolgen. Andererseits kann das Eingangssignal auch in diesem Fall die Energie für ein Antwortsignal bereitstellen.

Die Art, in der Daten auf ein Eingangssignal aufgeprägt werden, hängt von der gewünschten Art des resultierenden Antwortsignals (mit/ohne aufgeprägte Daten, Art der elektro-magnetischen Welle, Amplituden- und Frequenzverlauf) und der verwendeten Komponenten (Shutter, Signalverarbeitungs- bzw. Signalumwandlungsgeschwindigkeit) für eine erfindungsgemäße Vorrichtung ab. Um Informationen in Form von auf ein Eingangssignal aufgeprägten Daten und ausreichend Energie für ein entsprechendes Antwortsignal zu übertragen, ist es möglich, daß ein Eingangssignal ein aufgeprägte Daten umfassendes Signal und ein Signal umfaßt, das nur Energie, d.h. keine Daten überträgt. Vorzugsweise wird das Energiesignal zeitlich vor dem Datensignal übertragen, um die Aktivierung einer erfindungsgemäßen Vorrichtung zu ermöglichen, bevor unter Verwendung des Datensignals ein Antwortsignal erzeugt und ausgegeben wird. Es ist auch möglich, bei der Erzeugung eines Antwortsignals das Datensignal und das Energiesignal zu verwenden.

## Patentansprüche

1. Vorrichtung (10) zur Erzeugung eines Antwortsignals aus einem Eingangssignal, mit:
- einer Empfangseinrichtung (14,16,24,24A,26,40,40A) zum Empfang eines Eingangssignals (80) in Form eines Lichtstrahls,
- einer mit der Empfangseinrichtung (14,16,24,24A,26,40,40A) verbundene Steuereinrichtung (12 ) zum Steuern der Vorrichtung (10),
- einer Signalumwandlungseinrichtung (18) zum Umwandeln wenigstens eines Teils des Eingangssignals (80) in ein Antwortsignal (82) in Form eines Lichtstrahls, und
- einer Reflektoreinrichtung (16) zum Übertragen wenigstens eines Teils des Eingangssignals (80) zu der Signalumwandlungseinrichtung (18).

2. Vorrichtung nach Anspruch 1, dadurch gekennzeichnet, daß die Steuereinrichtung (12) ausgelegt ist, die Vorrichtung (10) in Antwort auf das Eingangssignal (80) und/oder ein externes Signal zu steuern.

3. Vorrichtung nach Anspruch 1 oder 2, dadurch gekennzeichnet, daß
- das Eingangssignal (80) ein Laserstrahl, und/oder
- das Antwortsignal (82) ein Infrarot-Lichtstrahl ist.

4. Vorrichtung nach einem der vorhergehenden Ansprüche, dadurch gekennzeichnet, daß
das Eingangssignal (80) erste aufgeprägte Daten aufweist und/oder ein mit einer vorgegebenen Frequenz modulierter Lichtstrahl ist.

5. Vorrichtung nach einem der vorhergehenden Ansprüche, dadurch gekennzeichnet, daß
das Antwortsignal (82) zweite aufgeprägte Daten aufweist.

6. Vorrichtung nach einem der vorhergehenden Ansprüche, dadurch gekennzeichnet, daß
die ersten aufgeprägten Daten eine Kennung einer das Eingangssignal (80) erzeugenden Vorrichtung (50), und/oder einen Programmcode und/oder Steuerbefehle für die Steuereinrichtung (12) umfassen.

7. Vorrichtung nach einem der vorhergehenden Ansprüche, dadurch gekennzeichnet, daß
die zweiten aufgeprägten Daten die Kennung der das Eingangssignal (80) erzeugenden Vorrichtung (50) und/oder eine Kennung der Steuereinrichtung (12) und/oder eine der Vorrichtung (10) zugeordnete Kennung und/oder einen Programmcode und/oder Steuerbefehle für eine das Antwortsignal (82) empfangende umfassen.

8. Vorrichtung nach einem der vorhergehenden Ansprüche, dadurch gekennzeichnet, daß
die Empfangseinrichtung Einrichtungen (26) zum Umwandeln wenigstens eines Teils des Eingangssignals (80) in ein internes Eingangssignal (84) in Form eines Lichtstrahls umfaßt.

9. Vorrichtung nach Anspruch 8, dadurch gekennzeichnet, daß das interne Eingangssignal (84) die ersten aufgeprägten Daten aufweist.

10. Vorrichtung nach einem der vorhergehenden Ansprüche, mit einer Detektoreinrichtung (14) zum Detektieren wenigstens eines Teils des Eingangssignals (80) oder wenigstens eines Teils des internen Eingangssignals (84) sowie der ersten aufgeprägten Daten und/oder der vorgegebenen Modulationsfrequenz.

11. Vorrichtung nach einem der vorhergehenden Ansprüche, dadurch gekennzeichnet, daß
die Steuereinrichtung (12) ausgelegt ist, die Signalumwandlungseinrichtung (18) in Abhängigkeit vom Empfang des Eingangssignals (80) oder des internen Eingangssignals (84) und/oder in Abhängigkeit der ersten aufgeprägten Daten zu steuern.

12. Vorrichtung nach einem der vorhergehenden Ansprüche, dadurch gekennzeichnet, daß
die Reflektoreinrichtung (16) wenigstens einen Spiegel umfaßt.

13. Vorrichtung nach einem der vorhergehenden Ansprüche, mit einer Signalleitung (42) zum Zuführen wenigstens eines Teils des Eingangssignals (80) oder wenigstens eines Teils des internen Eingangssignals (84) zu der Signalumwandlungseinrichtung (18).

14. Vorrichtung nach Anspruch 13, dadurch gekennzeichnet, daß die Signalleitung (42) wenigstens einen Lichtleiter oder ein Lichtleiterbündel umfaßt.

15. Vorrichtung nach einem der vorhergehenden Ansprüche, dadurch gekennzeichnet, daß
die Signalumwandlungseinrichtung (18) Einrichtungen zum Aufprägen der zweiten aufgeprägten Daten auf den übertragenen Teil des Eingangssignals (80) oder den übertragenen Teil des internen Eingangssignals (84) umfaßt.

16. Vorrichtung nach Anspruch 15, dadurch gekennzeichnet, daß die Einrichtungen zum Aufprägen der zweiten aufgeprägten Daten wenigstens einen optischen Shutter, wenigstens einen optischen Polarisator, wenigstens einen optischen Integrator oder wenigstens einen optischen Transformator umfassen.

17. Vorrichtung nach einem der vorhergehenden Ansprüche, mit einer Ausgabeeinrichtung (24,40B) zum Ausgeben des Antwortsignals (82).

18. Vorrichtung (50) zur Verwendung mit einer Vorrichtung (10) gemäß einem der vorhergehenden Ansprüche, mit
- einer Sendeeinrichtung (52) zum Aussenden des Eingangssignals (80) und/oder
- einer Empfängereinrichtung (54) zum Empfangen des Antwortsignals (82).
